(19) Europäisches Patentamt
European Patent Office
Office européen des brevets

(11) Veröffentlichungsnummer: **0 381 621 A2**

(12) # EUROPÄISCHE PATENTANMELDUNG

(21) Anmeldenummer: **90810052.2**

(51) Int. Cl.$^{5}$: **C08G 73/10**

(22) Anmeldetag: **23.01.90**

Die Bezeichnung der Erfindung wurde geändert (Richtlinien für die Prüfung im EPA, A-III, 7.3).

(30) Priorität: **01.02.89 CH 378/89**

(43) Veröffentlichungstag der Anmeldung: **08.08.90 Patentblatt 90/32**

(84) Benannte Vertragsstaaten: **BE CH DE FR GB IT LI NL SE**

(71) Anmelder: **CIBA-GEIGY AG**
**Klybeckstrasse 141**
**CH-4002 Basel(CH)**

(72) Erfinder: **Pfaendner, Rudolf, Dr.**
**Sackgasse 3**
**D-6149 Rimbach/Odenwald 1(DE)**

(54) **Polymere.**

(57) Beschrieben werden neue lösliche Polyamid-Polyimid Blockcopolymere mit einem mittleren Molekulargewicht $M_n$ von 1'000-50'000. Die neuen Verbindungen sind dadurch gekennzeichnet, dass 25-100 Mol % der Diaminreste Gruppen der Formel

I

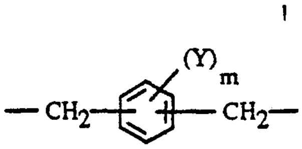 und/oder 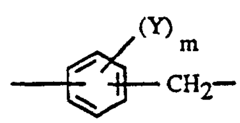

sind, worin Y Alkyl oder Halogen ist und m 0 bis 4 bedeutet.

Die Verbindungen sind in dipolaren, aprotischen Lösungsmitteln löslich und lassen sich durch Erhitzen zu unlöslichen Produkten vernetzen.

EP 0 381 621 A2

## Neue Polymere

Die vorliegende Erfindung betrifft neue Polyamid-Polyimid-Blockcopolymere (im folgenden PAPI Blockcopolymere genannt).

PAPI Blockcopolymere sind an sich bekannt und beispielsweise in der DE-A-2,342,464 beschrieben. Diese eignen sich wegen ihrer guten elektrischen, thermischen und/oder mechanischen Eigenschaften beispielsweise als Matrixharze für die Herstellung von Verbundwerkstoffen, als Beschichtungsharze in der Elektro- und Elektronik-Industrie, als flexible Laminierharze, als Klebfilme oder als Pressmassen. Uebliche PAPI Blockcopolymere sind in organischen Lösungsmitteln unlöslich oder nur wenig löslich, wie z.B. aus der US-A-4,503,285 bekannt ist. Daher muss zur Ausnützung der guten Eigenschaften der PAPI Blockcopolymeren im allgemeinen von der gut löslichen Vorstufe, den Polyamid-Polyamidsäure Blockcopolymeren ausgegangen werden. Diese Vorgehensweise ist in mancher Hinsicht nicht befriedigend. Zum einen sind die löslichen Vorprodukte in der Regel nur bedingt lagerstabil, da die durch Ringschluss entstehende Wassermenge zu einem Molekulargewichtsabbau und/oder der Ringschluss zu einem Ausfällen des Polymeren führt. Wird ausserdem die Imidisierung erst bei der Verarbeitung durchgeführt, so kann das entstehende Produkt infolge des austretenden Wassers Fehlstellen, wie Löcher und/oder Blasen aufweisen.

Es besteht daher der Wunsch nach löslichen PAPI Blockcopolymeren, die diese Nachteile nicht besitzen. Solche Polymeren sind bereits in der JP-A-62/30,121 und in der EP-A-260,709 beschrieben. Die vorbekannten Verbindungen sind durch die Verwendung vierkerniger aromatischer Diamineinheiten in den Polyamid- und den Polyimidblöcken oder durch die Anwesenheit von Polyamidimideinheiten in den Polyimidblöcken gekennzeichnet.

Solche löslichen PAPI Blockcopolymere besitzen Vorteile bei der Verarbeitung und können als Lösungen oder als Feststoffe nahezu unbegrenzt gelagert werden. In organischen Lösungsmitteln lösliche PAPI Blockcopolymere weisen andererseits den Nachteil auf, von solchen Lösungsmitteln angegriffen zu werden. Es ist also ein lösliches PAPI Blockcopolymer wünschenswert, das nach seiner Applikation aus der Lösung in einem nachfolgenden Schritt gegen einen Lösungsmittelangriff stabilisiert werden kann.

Es wurde jetzt gefunden, dass man dieses Ziel durch den Einbau von Xylylendiamineinheiten bzw. von Aminobenzylamineinheiten erreichen kann. Die erfindungsgemässen PAPI Blockcopolymeren zeichnen sich durch eine überraschend hohe Löslichkeit in dipolaren, aprotischen Lösungsmitteln und durch eine hohe Reaktivität bei der thermischen Vernetzung aus.

Ferner wurde gefunden, dass die erfindungsgemässen PAPI Blockcopolymeren bei hohen Temperaturen etwa bis zum Glasübergangspunkt getrocknet werden können, was ein rasches Reinigen der Polymeren ohne wesentliche Vernetzung erlaubt. Ueberraschenderweise ist die Differenz zwischen maximal möglicher Trocknungstemperatur und der Härtungstemperatur gering, so dass sich auch anwendungstechnische Vorteile ergeben.

Die vorliegende Erfindung betrifft lösliche Polyamid-Polyimid Blockcopolymere mit einem mittleren Molekulargewicht $M_n$ von 1'000-50'000, insbesondere von 5'000-40'000, enthaltend Kombinationen von Blöcken der Formeln Ia mit IIb und/oder IIc oder der Formeln Ib mit IIa und/oder IIc oder der Formeln Ic mit IIa und/oder IIb

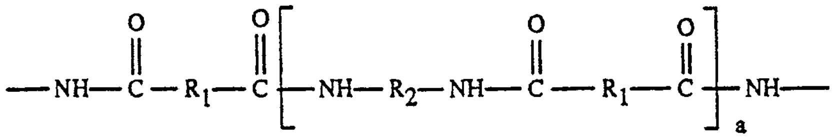 (Ia),

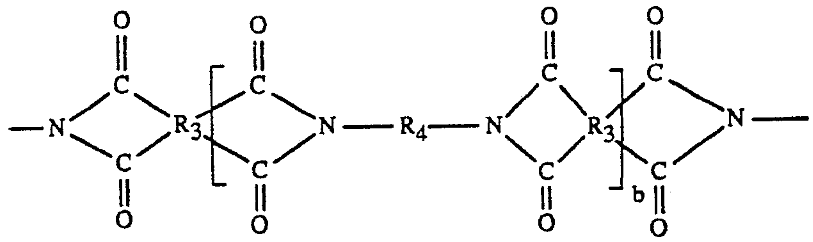 (Ib),

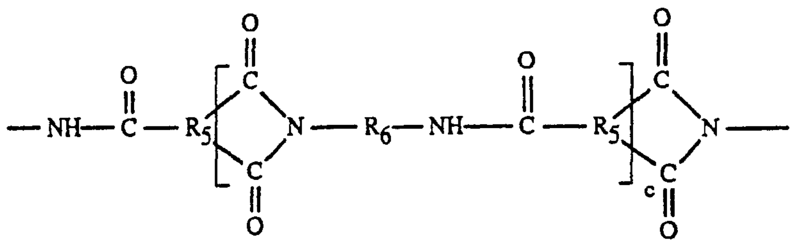 (Ic),

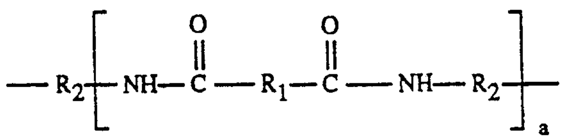 (IIa),

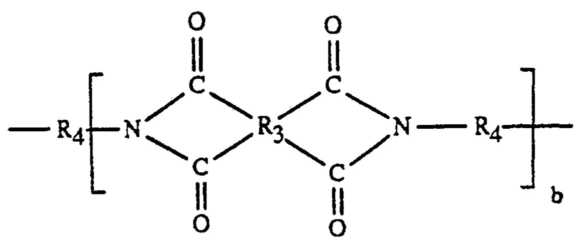 (IIb),

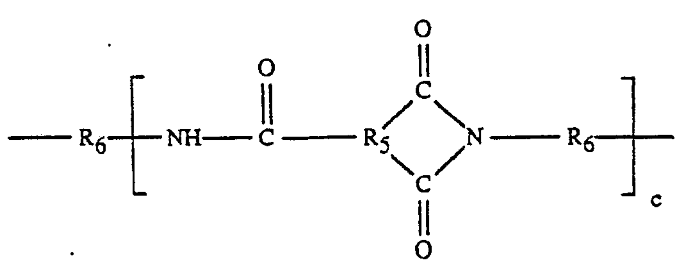 (IIc),

worin die Indizes a, b und c unabhängig voneinander ganze Zahlen von 1 bis 100 sind, $R_1$ ein Rest der Formeln $-C_nH_{2n}-$,

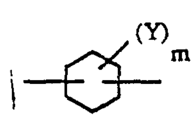 , 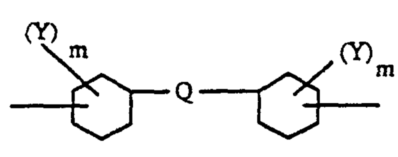 ,

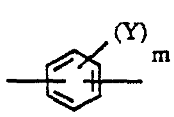 , 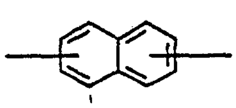 oder 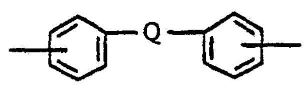

ist, n eine ganze Zahl von 2 bis 12 bedeutet, m eine ganze Zahl von 0 bis 4 ist, Y Alkyl oder Halogen ist, Q eine direkte Bindung darstellt oder $-CH_2-$, $-CH_2-CH_2-$, $-CH(CH_3)-$, $-C(CH_3)_2-$, $-C(CF_3)_2-$, -O-, -S-, $-SO_2-$ oder -CO- bedeutet, $R_2$ ein Rest der Formeln $-C_nH_{2n}-$,

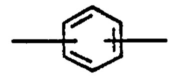 ,

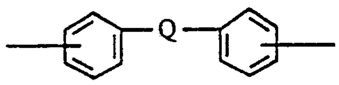 , 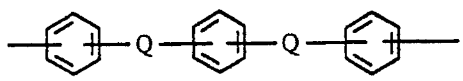 ,

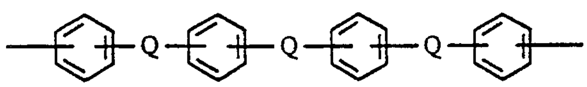 , 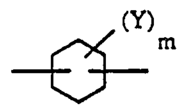 , 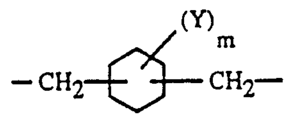 ,

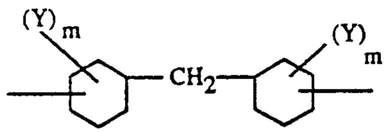 , 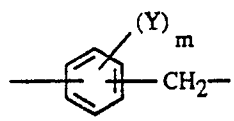

oder

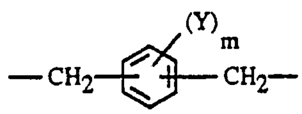

ist, n, m Y und Q eine der oben definierten Bedeutungen besitzen, $R_3$ ein Rest der Formeln

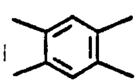 , 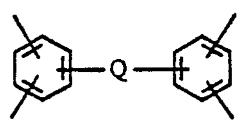 , 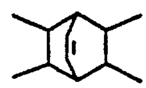 oder

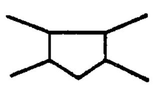

ist, Q eine der oben angegebenen Bedeutungen besitzt, $R_5$ ein Rest der Formel

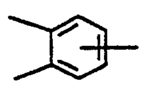

ist, und $R_4$ und $R_6$ unabhängig voneinander eine der für $R_2$ definierten Bedeutungen besitzen, mit der Massgabe, dass 25-100 Mol % aller Reste $R_2$, $R_4$ und $R_6$, bezogen auf die Gesamtmenge dieser Reste, die Formel

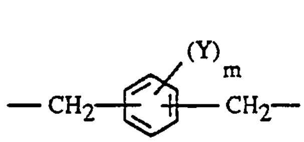 und/oder 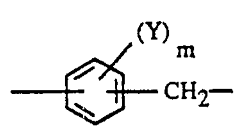

aufweisen.

Unter dem Begriff "lösliches PAPI Blockcopolymeres" wird im allgemeinen ein in dipolaren, aprotischen

Lösungsmitteln lösliches Copolymeres verstanden, aus dem sich Lösungen enthaltend mindestens 5 Gew.%, vorzugsweise mindestens 10 Gew.% PAPI Blockcopolymer, bezogen auf die Lösung, herstellen lassen.

Das Verhältnis von Polyamidblöcken zu Polyimidblöcken oder zu Polyamidimidblöcken in den erfindungsgemässen Copolymeren wird im allgemeinen durch die gewünschte Löslichkeit dieses Copolymeren in dipolaren, aprotischen Lösungsmitteln bestimmt. Die jeweiligen Anteile dieser Blöcke und der Gehalt an Xylylendiamineinheiten und/oder an Aminobenzylamineinheiten werden so gewählt, dass das Blockcopolymere in dipolaren, aprotischen Lösungsmitteln löslich ist und im vernetzten Zustand von diesen Lösungsmitteln praktisch nicht angegriffen wird.

Das bevorzugte Verhältnis von Amidgruppen zu Imidgruppen in den erfindungsgemässen Copolymeren beträgt 4:1 bis 1:4.

Die mittleren Molekulargewichte $M_n$ der Polyamidblöcke Ia oder IIa oder der der Polyimidblöcke Ib oder IIb oder der Polyamidimidblöcke Ic oder IIc betragen im allgemeinen 300 bis 20'000, vorzugsweise 500 bis 10'000.

Neben den oben erwähnten Kombinationen von zwei Blöcken können die erfindungs gemässen PAPI Blockcopolymeren auch Dreiblockkombinationen der Formeln Ia, Ib und IIc oder Ia, Ic und IIb oder Ib, Ic und IIa enthalten

Besonders bevorzugt sind Blockcopolymere die im wesentlichen aus den wiederkehrenden Struktureinheiten der Formeln Ia und IIb oder Ib und IIa bestehen.

Ganz besonders bevorzugte Blockcopolymere dieses Typs enthalten die Xylylendiamineinheiten oder die Aminobenzylamineinheiten oder eine Kombination von Xylylendiamineinheiten und Aminobenzylamineinheiten nur in den Polyimidblöcken Ib oder IIb. Vernetzte Produkte aus Verbindungen dieses Typs zeichnen sich durch eine besonders hohe thermische Stabilität aus.

Der Index n ist vorzugsweise 6 bis 12 und der Index m ist bevorzugt 0 oder 1, insbesondere 0.

Ein Alkylsubstituent Y in den obenstehenden Formeln kann verzweigt oder bevorzugt geradkettig sein. Bevorzugt wird geradkettiges $C_1$-$C_6$Alkyl. Beispiel dafür sind Methyl, Ethyl, n-Propyl, n-Butyl, n-Pentyl und n-Hexyl. Besonders bevorzugt wird Methyl.

Y als Halogen ist vorzugsweise Chlor oder Brom.

In den obenstehenden Formeln bedeutet $R_1$ beispielsweise 1,3-Phenylen, 1,4-Phenylen, 2,4-Tolylen, 1,5-Naphthylen, 1,8-Naphthylen, 2,6-Naphthylen, 4,4′-Biphenylen,

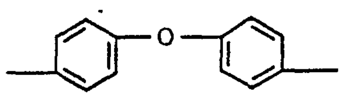 oder 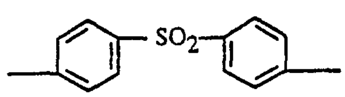 .

Bevorzugter Rest $R_1$ ist 1,3-Phenylen.

Bedeuten $R_1$, $R_2$, $R_4$ oder $R_6$ eine Gruppe $-C_nH_{2n}-$, so handelt es sich dabei beispielsweise um 1,2-Ethylen, 1,2-Propylen, 1,3-Propylen, 2,2-Propyliden, 1,4-Tetramethylen, 1,5-Pentamethylen, 1,6-Hexamethylen, 1,7-Heptamethylen, 1,8-Octamethylen, 1,9-Nonamethylen, 1,10-Decamethylen, 1,12-Dodecamethylen, 2,9-Decamethylen oder 2-Methyl-1,5-pentamethylen.

Sind $R_1$, $R_2$, $R_4$ oder $R_6$ eine Gruppe

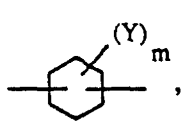 ,

so kann es sich dabei um 1,2-, 1,3- oder vorzugsweise um 1,4-Cyclohexylen handeln.

Weitere Beispiele für spezifische cycloaliphatische Gruppen $R_2$ und/oder $R_4$ und/oder $R_6$ sind

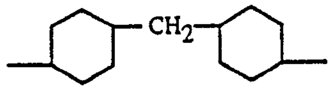 , 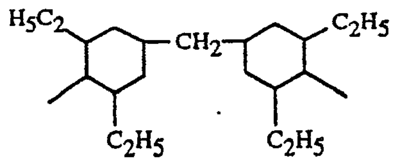 ,

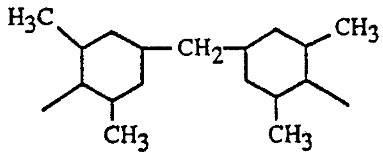 , 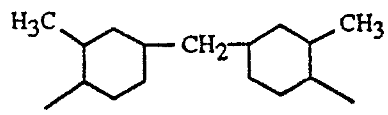 ,

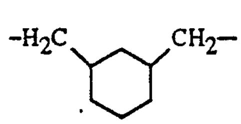 oder 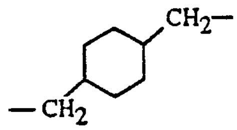 .

Beispiele für spezifische araliphatische Gruppen $R_2$ und/oder $R_4$ und/oder $R_6$ sind 1,3-Xylylen, 1,4-Xylylen,

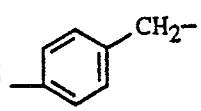 oder 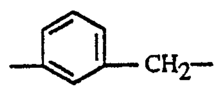 .

Beispiele für spezifische aromatische Gruppen $R_2$, $R_4$ oder $R_6$ sind 1,2-Phenylen, 1,3-Phenylen, 1,4-Phenylen, oder eine der folgenden Gruppen

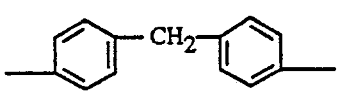 , 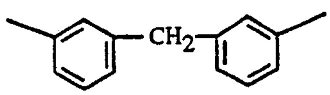 , 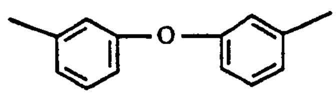 ,

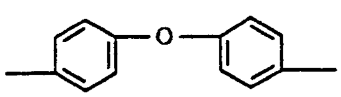 , 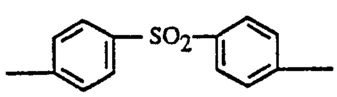 , 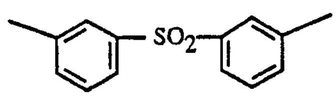 ,

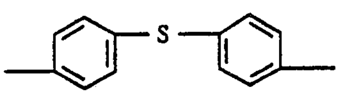 , 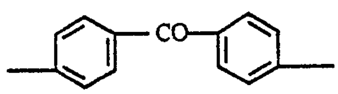 , 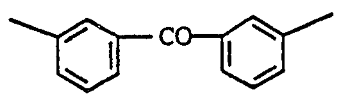 ,

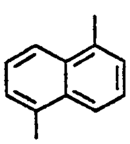 , 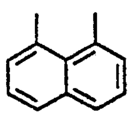 , 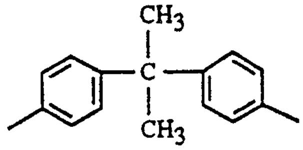 , 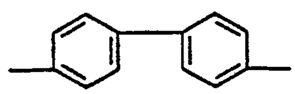 ,

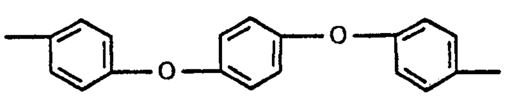 , 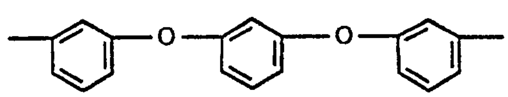 ,

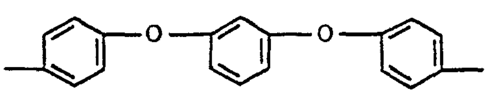, 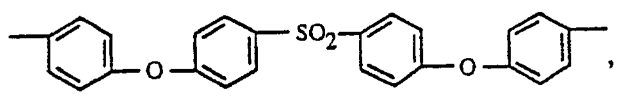,

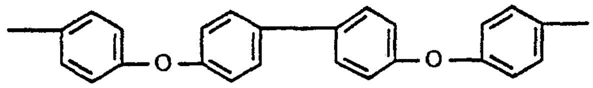,

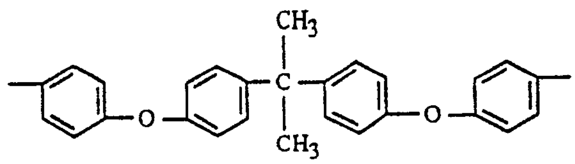, 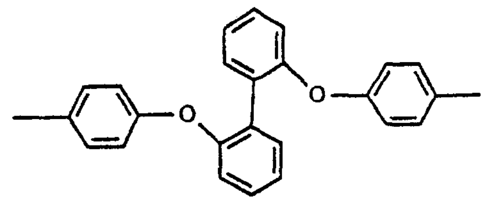.

Bevorzugte Reste $R_2$ und/oder $R_4$ und/oder $R_6$ sind 1,3-Phenylen,

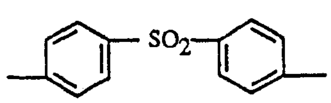, 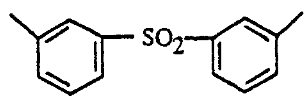

und insbesondere

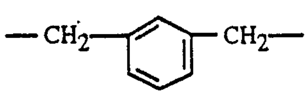, 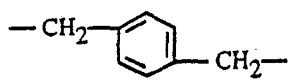, 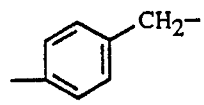 und 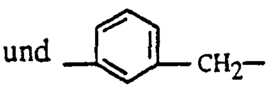.

$R_5$ ist vorzugsweise ein Rest der Formel

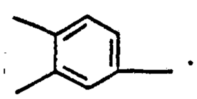.

Es hat sich gezeigt, dass die Thermostabilität der erfindungsgemässen PAPI Blockcopolymeren und der daraus erhältlichen vernetzten Produkte besonders gut ist, wenn sie einen hohen Anteil an aromatischen Resten aufweisen. Es sind daher PAPI Blockcopolymere bevorzugt, die überwiegend aromatische oder araliphatische Reste aufweisen, etwa solche, wie sie oben beispielhaft für $R_1$ bis $R_6$ aufgezählt sind.

Enthalten die Reste $R_1$, $R_2$, $R_3$, $R_4$ oder $R_6$ ein Brückenglied Q, so handelt es sich bevorzugt um $-CH_2-$, $-C(CH_3)_2-$, -O-, $-SO_2-$ oder -CO-.

Enthält ein Rest $R_2$, $R_4$ oder $R_6$ mehrere Brückenglieder Q, so können diese gleich oder verschieden sein.

Der vierwertige Rest $R_3$ leitet sich von einer Tetracarbonsäure ab, die in der Lage ist, ein Dianhydrid zu bilden.

Dabei handelt es sich bevorzugt um Reste der Formel

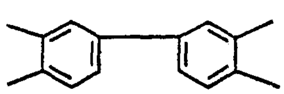 und 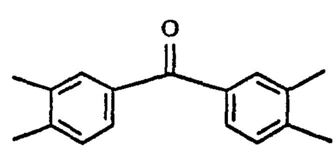.

Der Anteil der Xylylendiaminreste oder der Aminobenzylaminreste oder beiden Typen dieser Reste in den erfindungsgemässen Verbindungen beträgt vorzugsweise 25 bis 75 Mol %, bezogen auf den Anteil aller Diaminreste. Diese Verbindungen zeichnen sich im allgemeinen durch eine besonders gute Löslichkeit in dipolaren, aprotischen Lösungsmitteln aus.

Von diesen Verbindungen sind diejenigen besonders bevorzugt, worin neben den Xylylendiaminresten und/oder den Aminobenzylaminresten mindestens 25 Mol% der Reste $R_2$, $R_4$ und falls vorhanden $R_6$ sich

von Diaminodiphenylsulfon ableiten. Diese Verbindungen zeichnen sich im allgemeinen durch eine nochmals verbesserte Löslichkeit in dipolaren, aprotischen Lösungsmitteln aus.

Die Erfindung betrifft daher bevorzugt PAPI Blockcopolymere wie oben definiert, dadurch gekennzeichnet, das sich 25 bis 75 Mol %, inbesondere 50 bis 75 Mol % der Reste $R_2$, $R_4$ und falls vorhanden $R_6$ von Xylylendiamin oder von Aminobenzylamin oder von einer Kombination von Xylylendiamin und Aminobenzylamin ableiten, insbesondere von 1,3-Xylylendiamin, und dass sich mindestens 25 Mol % der Reste $R_2$, $R_4$ und falls vorhanden $R_6$ von Diaminodiphenylsulfon ableiten, wobei die Mengenangaben sich auf die Gesamtmenge dieser Reste beziehen.

In besondere bevorzugten PAPI Blockcopolymeren der vorliegenden Erfindung leiten sich praktisch alle von Xylylendiamin und/oder von Aminobenzylamin abweichenden Reste $R_2$, $R_4$ und falls vorhanden $R_6$ von Diaminodiphenylsulfon ab.

Die Herstellung der erfindungsgemässen Blockcopolymeren erfolgt auf an sich bekannte Weise, und kann beispielsweise nach einer der in der DE-A-2,342,464 beschriebenen Arbeitsweisen durch Umsetzung vorgeformter Polyamid-, Polyamidamidsäure- und Polyamidsäureblöcke und anschliessende Cyclisierung der Polyamid-Polyamidsäure erfolgen. Eine weitere Herstellungsmethode umfasst die Umsetzung von Polyamidsäuren der Formel IIIa und/oder IIIb

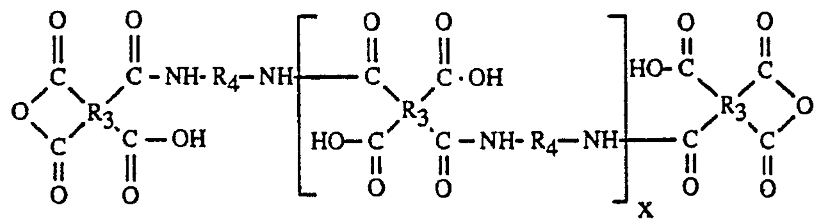 (IIIa)

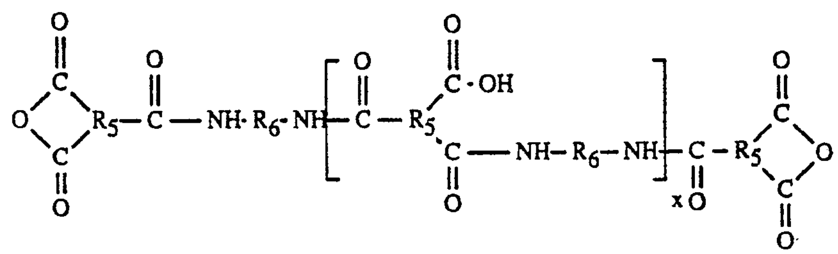 (IIIb)

mit Diaminen der Formel IV

$H_2N-R_2-NH_2$ (IV),

und mit Dicarbonsäurechloriden der Formel V

$Cl-OC-R_1-CO-Cl$ (V)

und die anschliessende Cyclisierung der so erhaltenen Polyamid-Polyamidsäure Blockcopolymeren. In den Formeln IIIa, IIIb, IV und V haben die Symbole $R_1$, $R_2$, $R_3$, $R_4$, $R_5$ und $R_6$ die oben angegebene Bedeutung und x steht für eine ganze Zahl $\geq 0$, bevorzugt für $\geq 1$.

Die Herstellung der Polyamidsäuren der Formeln IIIa, bzw. IIIb ist ebenfalls an sich bekannt und erfolgt beispielsweise durch die Umsetzung von Tetracarbonsäureanhydriden der Formel VIa bzw. von Tricarbonsäureanhydriden VIb oder einem entsprechenden Tricarbonsäureanhydridchlorid

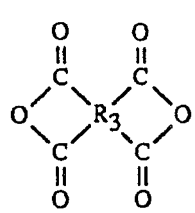 (VIa), 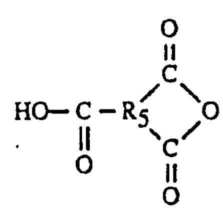 (VIb)

worin $R_3$ und $R_5$ die oben angegebene Bedeutung haben, mit einem Unterschuss eines Diamins der Formel IV.

Die Ausgangsprodukte der Formeln IV, V, VIa und VIb sind an sich bekannt und teilweise im Handel erhältlich.

Durch Wahl der geeigneten Reaktionsbedingungen, wie z.B. durch geeignete Wahl der Molverhältnisse

der Reaktionspartner, lassen sich die gewünschten mittleren Molekular gewichte der einzelnen Blöcke einstellen. Diese Auswahl ist dem Fachmann an sich bekannt.

Die Polykondensation der Di-, Tri- oder Tetracarbonsäurederivate der Formeln IIIa, IIIb, V, VIa oder VIb mit den Diaminen der Formel IV kann auf an sich bekannte Weise vorgenommen werden, vorzugsweise in einem wasserfreien organischen Lösungsmittel und unter Feuchtigkeitsausschluss, z.B. unter Stickstoff bei Temperaturen zwischen -20° C und +50° C, insbesondere etwa -15° C bis +10° C.

Geeignete organische Lösungsmittel sind beispielsweise N,N-Dimethylacetamid, N,N-Diethylacetamid, N,N-Dimethylformamid, N-Methyl-2-pyrrolidon (NMP), N-Acetyl-2-pyrrolidon, N-Methyl-ε-caprolactam, N,N,N′,N′-Tetramethylharnstoff, Tetrahydrothiophendioxid (Sulfolan) und Dimethylsulfoxid.

Die Reaktion kann auch in Gemischen solcher Lösungsmittel durchgeführt werden. Andererseits ist es auch möglich, diese bevorzugten Lösungsmittelsysteme mit anderen organischen aprotischen Lösungsmitteln, wie aromatischen, cycloaliphatischen oder aliphatischen, gegebenenfalls chlorierten Kohlenwasserstoffen, beispielsweise Toluol, Xylolen, Cyclohexan, Pentan, Hexan, Petrolether, Dichlormethan, Tetrahydrofuran, Cyclohexanon und Dioxan, zu verdünnen.

Die Polyamidblöcke können auch mittels Grenzflächen-Polykondensation hergestellt werden.

Nach Beendigung der Umsetzung lassen sich die Lösungsmittel gewünschtenfalls auf übliche Weise entfernen, beispielsweise durch Abdestillieren, gegebenenfalls unter vermindertem Druck. Die Polyamid-Polyamidsäure Blockcopolymeren können, falls gewünscht, nach an sich bekannten Methoden durch Eingiessen der Reaktionslösung in ein Fällungsmittel, wie Wasser oder aliphatische Kohlenwasserstoffe, z.B. in Petrolether, besonders jedoch in Methanol, Isopropanol, Aceton, beidseitige Ether des Mono-, Di- oder Triethylenglykols oder Acetonitril, ausgefällt und gegebenenfalls getrocknet werden.

Die Cyclisierung der Polyamid-Polyamidsäure Blockcopolymeren zu den entsprechenden PAPI Blockcopolymeren erfolgt, indem man die Polyamid-Polyamidsäure Blockcopolymeren vorzugsweise ohne vorherige Isolation, d.h. direkt in der oben beschriebenen Reaktionslösung auf Temperaturen zwischen 50 und 300° C erhitzt oder mit einem De hydratisierungsmittel allein oder im Gemisch mit einem tertiären Amin behandelt. In Frage kommen z.B. Essigsäureanhydrid oder Propionsäureanhydrid oder ein Gemisch aus Essigsäureanhydrid und Triethylamin oder Pyridin. Verfahren diser Art sind beispielsweise in der US-A-3,894,114, der US-A-4,124,651 oder der US-A-4,503,285 beschrieben.

Die erfindungsgemässen Verbindungen können auch hergestellt werden, indem in an sich bekannter Weise zuerst ein Polyamidblock oder Polyamidimidblock aufgebaut wird und anschliessend durch Umsetzung mit Tetracarbonsäureanhydrid und Diamin das Polyamidsäure-Polyamid Blockcopolymere hergestellt wird, das anschliessend cyclisiert wird.

Die erfindungsgemässen PAPI Blockcopolymeren besitzen eine für die eingangs erwähnte Problemstellung gute Löslichkeit in aprotischen, dipolaren Lösungsmitteln. Sehr gute Löslichkeiten können beispielsweise in N,N-Dimethylacetamid, N,N-Dimethylformamid, N,N-Dimethylacetamid, N-Methyl-2-pyrrolidon, Sulfolan, Dimethylsulfoxid oder γ-Butyrolacton gegebenenfalls unter Erwärmen erzielt werden.

Es ist zu erwähnen, das im allgemeinen eine hohe Konzentration der polymeren Verbindungen erwünscht ist. Die so hergestellten Lösungen sind im Gegensatz zur Polyamid-Polyamidsäurevorstufe lagerstabil. Das gleiche gilt natürlich auch für den Feststoff selbst.

Auf diese Weise gelingt die Herstellung von Lösungen, welche im wesentlichen frei von Nebenprodukten und Monomerresten sind. Die Verarbeitung erfolgt äusserst einfach, da kein Cyclisierungsschritt zu durchlaufen ist und damit keine Wasserabspaltung erfolgt, welche zu unerwünschten Effekten und Schädigung des Endprodukts führt. Bei der Anwendung der erfindungsgemässen PAPI Blockcopolymeren muss lediglich das Lösungsmittel entfernt werden und es gelingt die Herstellung von Produkten hoher Qualität und hoher thermischer Stabilität mit der Möglichkeit zu hohen Gebrauchstemperaturen.

In einem Folgeschritt oder gleichzeitig mit dem Entfernen des Lösungsmittels lassen sich die erfindungsgemässen Copolymeren durch Erhitzen vernetzen. Die Temperaturen für den Vernetzungsschritt sind im allgemeinen, je nach verwendetem Copolymeren, unterschiedlich. In der Regel erhitzt man die Copolymeren oberhalb ihrer Glasumwandlungstemperatur ($T_g$ Wert) oder, im Falle von mehreren $T_g$ Werten, oberhalb ihres niedrigsten, insbesondere oberhalb ihres höchsten $T_g$ Wertes. $T_g$ Werte lassen sich beispielsweise durch Differential Scanning Calorimetry (DSC) bestimmen, wobei hier der "onset Wert" [= Schnittpunkt der verlängerten Basislinie mit der Tangente an die Messkurve im Bereich des steilsten Anstiegs] Verwendung findet. Der Begriff "Glasumwandlungstemperatur" bezieht sich auf die Werte des Polymeren in der jeweiligen Formulierung. Dabei kann es sich um Werte handeln, die auch unterhalb der Werte für das reine Polymere liegen. So können beispielsweise lösungsmittel- und/oder weichmacherhaltige Polymere $T_g$ Werte aufweisen, die unterhalb der Werte für das reine Polymere liegen. In der Regel erfolgt die Vernetzung bei Temperaturen zwischen 250 und 350° C.

Die Erfindung betrifft also auch ein Verfahren zur Herstellung von vernetzten PAPI Blockcopolymeren,

dadurch gekennzeichnet, dass man die Verbindungen enthaltend Blöcke der oben definierten Formeln Ia und IIb und/oder IIc oder der Formeln Ib und IIa und/oder IIc oder der Formeln Ic und IIa und/oder IIb auf Temperaturen oberhalb ihres Glasumwandlungspunktes erhitzt.

Ferner betrifft die Erfindung die durch dieses Verfahren erhältlichen vernetzten Produkte.

Mit dem erfindungsgemässen Verfahren lassen sich auf vorteilhafte Weise Beschichtungen mit einer grossen Schichtdicke oder auch Formkörper herstellen, da die thermische Härtung innerhalb des gesamten vernetzbaren Materials im wesentlichen gleichmässig erfolgt.

Die definitionsgemässen Blockcopolymeren zeichnen sich durch eine gute Verarbeitbarkeit aus und können zur Herstellung von industriellen Erzeugnissen, wie Fasern, faserverstärkten Verbundwerkstoffen, Schichtkörpern, Giesskörpern, Laminaten, Matrixharzen, Honeycomb-Core Materialien, Lacken, Klebstoffen, Schaumstoffen, Ueberzugsmassen, Filmen (Folien), Press- und Sinterpulvern und Presskörpern verwendet werden.

Insbesondere lassen sich die erfindungsgemässen Blockcopolymeren zur Herstellung von Beschichtungen, Folien und flexiblen Laminaten oder als Klebstoffe, Matrixharze oder Pressmassen verwenden.

Dazu können den Blockcopolymeren vor dem Vernetzungsschritt übliche Zusatzstoffe zugegeben werden, wie Pigmente, Füllstoffe, elektrische Leiter, wie beispielsweise Russ oder Metallpartikel, Mittel zur Erhöhung der Abriebfestigkeit, Schmiermittel oder verstärkende Fasern, wie Kohlenstoff-, Bor- oder Glasfasern.

Schichtkörper, welche die erfindungsgemässen Blockcopolymeren enthalten, können gegebenenfalls mit die Oberflächeneigenschaften verbessernden Ueberzugsschichten, z.B. aus Phenolharzen, Aluminium, versehen werden und finden unter anderem im Flugzeugbau Verwendung.

Erfindungsgemässe Blockcopolymer, vorzugsweise in Form von Lösungen, können auch als Ueberzugsmassen und Klebstoffe gegebenenfalls unter Zusatz von Pigmenten, wie Titandioxid, üblichen Füll- und Schaumstoffen, zum Beschichten und Ueberziehen von Substraten der verschiedensten Art in beliebiger Form, wie Folien, Fasern, Faservliesen, Drähten, gitterförmigen Strukturen, Geweben, Schaumstoffen, verwendet werden.

Als geeignete Substrate seinen erwähnt: Metalle oder Legierungen, wie Kupfer, Messing, Aluminium, Eisen oder Stahl; Asbest- oder Glasfasermaterialien; Polymere, wie Cellulosematerialien (Celluloseester oder -ether, Papier); Perfluorkohlenstoffpolymere, z.B. Polytetrafluorethylen, Polyolefine, Polyester, Polyamide, Polyimide oder Polyurethane.

Die folgenden Beispiele erläutern die Erfindung.

Synthesebeispiel 1:

Polyamidsäureblock:

In einem Doppelmantelreaktionsgefäss mit Schutzgasanschluss, Innenthermometer, Tropftrichter und Rührer werden under Stickstoff 44,13 g 3,3′,4,4′-Biphenyltetracarbonsäuredianhydrid (0,15 Mol) und 250 g N-Methylpyrrolidon (NMP) eingewogen. Das Reaktionsgefäss wird dreimal evakuiert und mit Stickstoff begast. Nach Abkühlen auf -7° C ergibt sich eine Suspension. Über den Tropftrichter wird bei einer Temperatur zwischen -7 und -4° C im Verlauf von 80 Minuten eine Lösung von 15,57 g (0,0635 Mol) 4,4′-Diaminodiphenylsulfon und von 8,52 g (0,0625 Mol) m-Xylylendiamin in 156 g NMP zugegeben. Danach lässt man die Reaktionsmischung auf Raumtemperatur kommen und rührt 2 Stunden nach.

Polyamid-Polyamidsäure-Blockcopolymeres:

Die klare Reaktionsmischung wird erneut abgekühlt (-7° C). Über den Tropftrichter werden sodann 62,21 g (0,2500 Mol) 4,4′-Diaminodiphenylsulfon in 300 g NMP im Verlauf von 150 Minuten zugetropft. Im folgenden werden 45,68 g (0,225 Mol) Isophthalsäuredichlorid portionsweise zugegeben, so dass die Innentemperatur 0° C nicht übersteigt. Man benötigt etwa 150 Minuten, wobei die Lösung in zunehmendem Masse viskos wird. Schliesslich wird die Polymerlösung bei Raumtemperatur 50 Minuten gerührt. Man setzt weitere 0,51 g (0,0025 Mol) Isophthalsäure dichlorid zu und rührt 3 Stunden zur Vervollständigung der Polykondensation. Danach gibt man über einen Tropftrichter im Verlauf von 20 Minuten 34,00 g (0,4725 Mol) Butylenoxid zu (Innentemperatur 20-25° C). Man erhält auf diese Weise eine Lösung eines Polyamid-Polyamidsäure-Blockcopolymeren mit einer inhärenten Viskosität von 0,64 dl/g (0,5 Gew.-% an Feststoff in

NMP/25 °C).

Cyclisierung:

Die nun vorliegende Polyamid-Polyamidsäure Blockcopolymeren-Lösung wird nun der chemischen Cyclisierung zum Polyamid-Polyimid-Blockcopolymeren unterzogen. Dazu erfolgt über einen Tropftrichter zunächst die Zugabe von 79,69 g (0,7875 Mol) Triethylamin innerhalb von 45 Minuten und dann von 80,40 g (0,7875 Mol) Acetanhydrid innerhalb von 40 Minuten bei 20-25 °C. Man lässt nun weitere 6 Stunden bei Raumtemperatur rühren. Die inhärente Viskosität (0,5% Feststoff, NMP, 25 °C) eines so hergestellten Polyamid-Polyimid-Blockcopolymeren beträgt 0,74 dl/g.
Ein Teil der oben beschriebenen Lösung wird mit NMP verdünnt, in der 10fachen Menge Ethanol ausgefällt und im Trockenschrank unter Vakuum getrocknet. Die Temperatur wird dabei innerhalb von 72 Stunden stufenweise auf 200 °C erhöht und bei dieser Temperatur 8 Stunden belassen. Das Polymere ist nach diesem Trockenprozess zu mehr als 25% in NMP löslich. Die inhärenten Viskosität (0,5%, NMP, 25 °C) des Polymeren beträgt 0,60 dl/g.

Beschichtung:

Eine Lösung des oben beschriebenen Polyamid-Polyimid-Blockcopolymeren mit 25-Gew.-% in NMP wird mittels einer Lackhantel (Höhe 200 µm) auf eine Kupferfolie aufgetragen. Die Hauptmenge des Lösungsmittels wird durch eine 15minütige IR-Bestrahlung entfernt. Die Polymerschicht eines so hergestellten Probestreifens lässt sich durch 30minütiges Eintauchen in NMP nahezu vollständig ablösen. Ein weiterer Probestreifen wird zusätzlich im Vakuum (15 mbar) innerhalb von 30 Minuten von Raumtemperatur auf 300 °C und bei dieser Temperatur weitere 30 Minuten erwärmt. Man erhält eine blasenfrei beschichtete, flexible Cu-Folie. Die so behandelte Folie wird gewogen, 30 Minuten in NMP getaucht und erneut gewogen. Dabei zeigt sich ein unverändertes Gewicht, d.h. die Beschichtung wird nicht mehr von NMP angegriffen. Ebenso ist die Oberfläche der Beschichtung vor und nach der NMP-Behandlung unverändert.

Synthesebeispiele 2 - 12:

Die in der folgenden Tabelle angegebenen Beispiel 2 - 12 für lösliche Polyamid-Polyimid-Blockcopolymere werden wie unter Beispiel 1 beschrieben hergestellt. In der Tabelle werden die folgenden Abkürzungen verwendet:
$\eta_{inh}$: Inhärente Viscosität gemessen an einer 0,5 gew.%igen Lösung des Polymeren bei 25 °C in (NMP),
TGA: Thermogravimetrische Analyse (2 % Gewichtsverlust bei der angegebenen Temperatur unter $N_2$, Heizrate: 10 °C/min),
BTDA: 3,3′,4,4′-Benzophenontetracarbonsäuredianhydrid,
BPDA: 3,3′,4,4′-Biphenyltetracarbonsäuredianhydrid,
IPC: Isophthalsäuredichlorid,
TMAC: Trimellitsäureanhydridchlorid,
mXDA: m-Xylylendiamin,
pXDA: p-Xylylendiamin,
ABA: Aminobenzylamin (Gemisch von m- und p-Isomeren),
mPDA: m-Phenylendiamin
mDDS: 3,3′-Diaminodiphenylsulfon,
pDDS: 4,4′-Diaminodiphenylsulfon.

**Tabelle:** Polyamid-Polyimid-Blockcopolymere, die analog Beispiel 1 hergestellt werden

| Nr. | PI - Block: Tetracarbonsäure-dianhydrid (Mol) | PI - Block: Diamin (Mol) | PA - Block: Dicarbonsäure-dichlorid (Mol) | PA - Block: Diamin (Mol) | η inh [dl/g] PAPAS | η inh [dl/g] PAPI | Löslichkeit in NMP (%) nach Trocknung bei 200°C | 2% Gewichtsverlust bei einer Temperatur von [°C], TGA | Gewichtsverlust [%] Beschichtung nach 30 Min/300°C und 30 Min NMP |
|---|---|---|---|---|---|---|---|---|---|
| 1 | BPDA 0,1500 | mXDA 0,0625; pDDS 0,0625 | IPC 0,2275 | pDDS 0,2500 | 0,64 | 0,74 | > 25 | > 450 | < 0,5 |
| 2 | BTDA 0,1500 | mXDA 0,0625; pDDS 0,0625 | IPC 0,2275 | pDDS 0,2500 | 0,59 | 0,67 | > 25 | > 450 | ~ 1 |
| 3 | BTDA 0,1500 | mXDA 0,0625; mDDS 0,0625 | IPC 0,2275 | mDDS 0,2500 | 0,33 | 0,59 | > 25 | > 450 | < 0,5 |
| 4 | BTDA 0,1500 | mXDA 0,0625; mDDS 0,0313; pDDS 0,0313 | IPC 0,2275 | mDDS 0,1250; pDDS 0,1250 | 0,48 | 0,54 | > 25 | > 450 | < 0,5 |
| 5 | BTDA 0,1500 | mXDA 0,0416; mDDS 0,0416; pDDS 0,0416 | IPC 0,2275 | mDDS 0,0833; pDDS 0,0833; mPDA 0,0833 | 0,40 | 0,40 | > 25 | > 450 | < 0,5 |
| 6 | BTDA 0,0919 | mXDA 0,0395; pDDS 0,0397 | IPC 0,1608 | mXDA 0,0858; mPDA 0,0854 | 0,40 | 0,31 | > 25 | 420 | < 0,5 |
| 7 | TMAC 0,1066 | mXDA 0,1247 | IPC 0,2352 | mPDA 0,2136 | 0,23 | 0,25 | > 25 | 400 | < 0,5 |
| 8 | BTDA 0,1250 | pXDA 0,0521; pDDS 0,0521 | IPC 0,1900 | pDDS 0,2084 | 0,45 | 0,43 | > 25 | 410 | 0 |
| 9 | BTDA 0,1250 | ABA 0,0521; pDDS 0,0521 | IPC 0,1900 | pDDS 0,2084 | 0,45 | 0,35 | > 25 | 420 | 1,4 |
| 10 | BTDA 0,1250 | pDDS 0,1042 | IPC 0,1900 | ABA 0,1042; pDDS 0,1042 | 0,36 | 0,28 | > 25 | 380 | 0 |
| 11 | BTDA 0,1250 | pDDS 0,0521; ABA 0,0521 | IPC 0,1900 | ABA 0,1042; pDDS 0,1042 | 0,35 | 0,31 | > 25 | 380 | 0 |
| 12 | BTDA 0,1250; TMAC 0,1250 | pDDS 0,1460; mXDA 0,1460 | IPC 0,3610 | pDDS 0,3210 | 0,52 | 0,46 | > 25 | 400 | ~ 1 *) |

*) Beschichtung nach 30 Min/350°C und 30 Min NMP

Beispiel 13:

Mit diesem Beispiel werden die guten mechanischen Eigenschaften eines mit einem erfindungsgemässen PAPI-Blockcopolymeren hergestellten flexiblen Laminates gezeigt.

Mittels einer Lackhantel (200 µm) beschichtet man eine Kupferfolie mit einer 25 %igen Lösung des Blockcopolymeren gemäss Synthesebeispiel 1 in N-Methylpyrrolidon. Die Beschichtung wird mit IR-Strahlung (Heraeus Modell MBS 225/125) 45 Minuten lang getrocknet. Die beschichtete Folie wird sodann in 1 cm lange Streifen zerschnitten und das "Flex-Life" des Laminates bestimmt [= Zahl der Faltungen bis zum Bruch des Laminates mittels Universal-Model 2 FDF Flex Ductility Tester (Hersteller: Universal Manufacturing Co.) mit Zuggewicht 224 g und 2 mm Dorn ermittelt]. Dabei ergibt sich für 5 Prüfstreifen ein Mittelwert von 354 Cyclen.

## Ansprüche

1. Lösliche Polyamid-Polyimid Blockcopolymere mit einem mittleren Molekulargewicht $M_n$ von 1'000-50'000 enthaltend Kombinationen von Blöcken der Formeln Ia mit IIb und/oder IIc oder der Formeln Ib mit IIa und/oder IIc oder der Formeln Ic mit IIa und/oder IIb

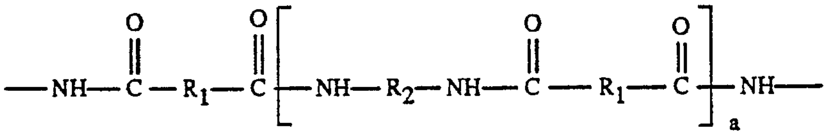 (Ia),

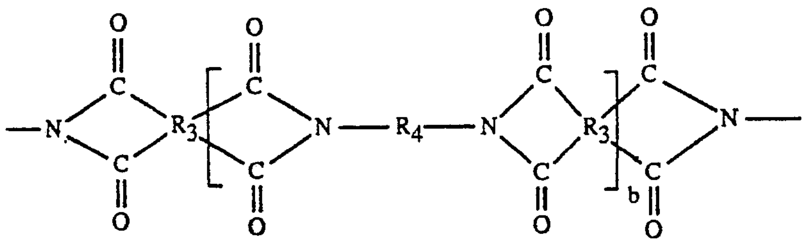 (Ib),

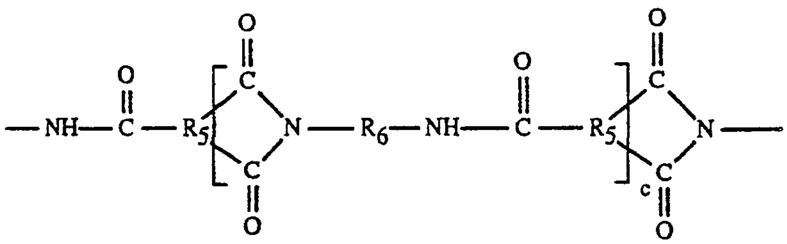 (Ic),

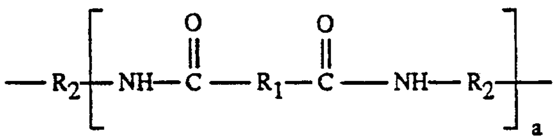 (IIa),

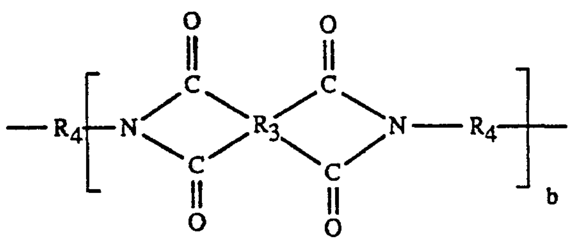 (IIb),

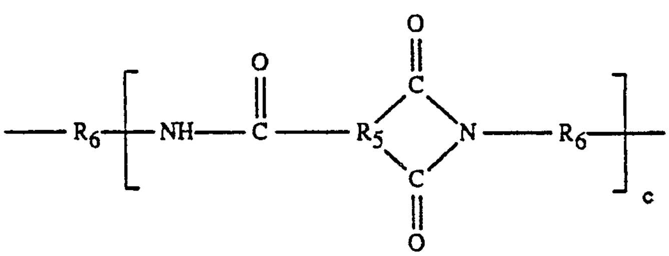 (IIc),

worin die Indizes a, b und c unabhängig voneinander ganze Zahlen von 1 bis 100 sind, $R_1$ ein Rest der Formeln $-C_nH_{2n}-$,

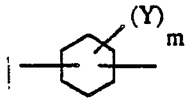, 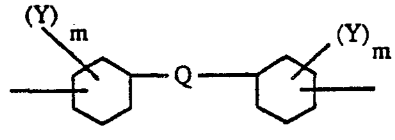,

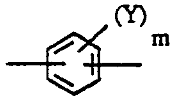, 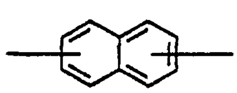 oder 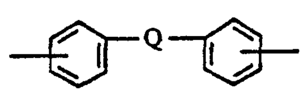

ist, n eine ganze Zahl von 2 bis 12 bedeutet, m eine ganze Zahl von 0 bis 4 ist, Y Alkyl oder Halogen ist, Q

eine direkte Bindung darstellt oder $-CH_2-$, $-CH_2-CH_2-$, $-CH(CH_3)-$, $-C(CH_3)_2-$, $-C(CF_3)_2-$, -O-, -S-, $-SO_2-$ oder -CO- bedeutet, $R_2$ ein Rest der Formeln $-C_nH_{2n}-$,

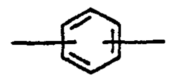 ,

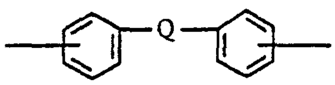 , 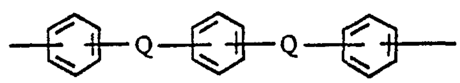 ,

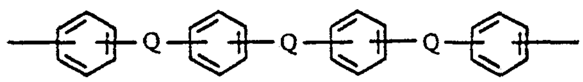 , 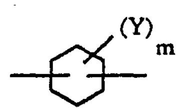 , 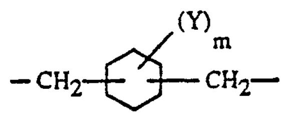 ,

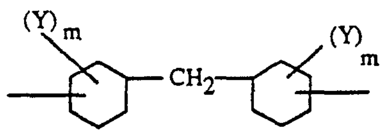 , 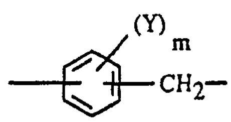

oder

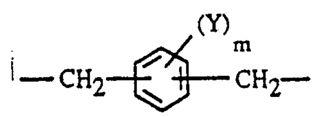

ist, n, m Y und Q eine der oben definierten Bedeutungen besitzen, $R_3$ ein Rest der Formeln

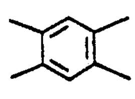 , 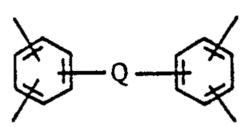 , 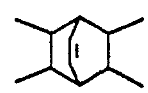 oder

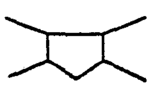

ist, Q eine der oben angegebenen Bedeutungen besitzt, $R_5$ ein Rest der Formel

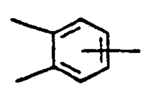

ist, und $R_4$ und $R_6$ unabhängig voneinander eine der für $R_2$ definierten Bedeutungen besitzen, mit der Massgabe, dass 25-100 Mol % aller Reste $R_2$, $R_4$ und $R_6$, bezogen auf die Gesamtmenge dieser Reste, die Formel

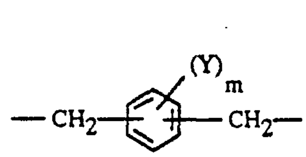 und/oder 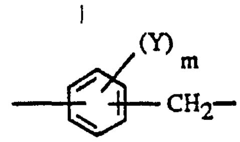

aufweisen.

2. Blockcopolymere gemäss Anspruch 1, dadurch gekennzeichnet, dass das Verhältnis von Amidgruppen zu Imidgruppen 4:1 bis 1:4 beträgt.

3. Blockcopolymere gemäss Anspruch 1, dadurch gekennzeichnet, dass diese im wesentlichen aus den

wiederkehrenden Struktureinheiten der Formeln Ia und IIb oder Ib und IIa bestehen.

4. Blockcopolymere gemäss Anspruch 3, dadurch gekennzeichnet, dass die Xylylendiamineinheiten oder die Aminobenzylamineinheiten oder eine Kombination von Xylylendiamineinheiten und Aminobenzylamineinheiten nur in den Polyimidblöcken Ib oder IIb enthalten sind.

5. Blockcopolymere gemäss Anspruch 1, dadurch gekennzeichnet, dass der Index n 6 bis 12 ist und der Index m 1 oder 0 ist.

6. Blockcopolymere gemäss Anspruch 5, dadurch gekennzeichnet, dass der Index m 0 ist.

7. Blockcopolymere gemäss Anspruch 1, dadurch gekennzeichnet, dass $R_1$ 1,3-Phenylen ist.

8. Blockcopolymere gemäss Anspruch 1, dadurch gekennzeichnet, dass $R_2$ und/oder $R_4$ und/oder $R_6$ 1,3-Phenylen,

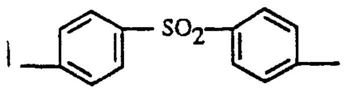,
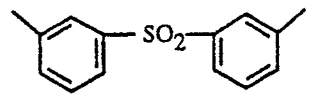,

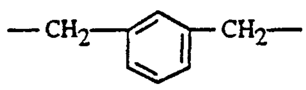,
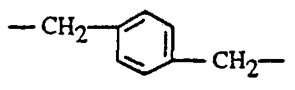,
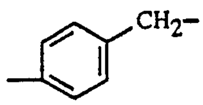
oder
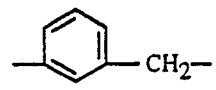

sind.

9. Blockcopolymere gemäss Anspruch 8, dadurch gekennzeichnet, dass $R_2$ und/oder $R_4$ und/oder $R_6$

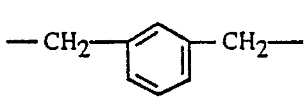,
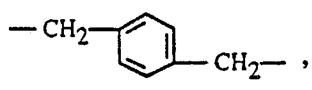,
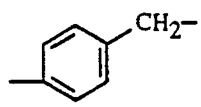
oder

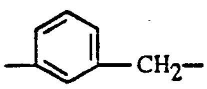

sind.

10. Blockcopolymer gemäss Anspruch 1, dadurch gekennzeichnet, dass $R_5$ ein Rest der Formel

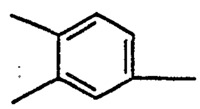

ist.

11. Blockcopolymere gemäss Anspruch 1, dadurch gekennzeichnet, dass Q $-CH_2-$, $-C(CH_3)_2-$, -O-, $-SO_2-$ oder -CO- ist.

12. Blockcopolymere gemäss Anspruch 1, dadurch gekennzeichnet, dass $R_3$ ein Rest der Formeln

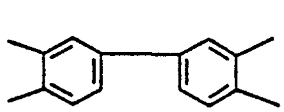
oder
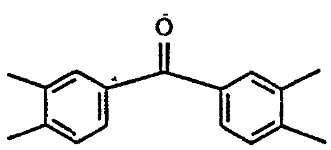

ist.

13. Blockcopolymere gemäss Anspruch 1, dadurch gekennzeichnet, dass sich 25 bis 75 Mol % der Reste $R_2$, $R_4$ und falls vorhanden $R_6$ von Xylylendiamin oder von Aminobenzylamin oder von einer Kombination von Xylylendiamin und Aminobenzylamin ableiten, und dass sich mindestens 25 Mol % der Reste $R_2$, $R_4$ und falls vorhanden $R_6$ von Diaminodiphenylsulfon ableiten, wobei die Mengenangaben sich auf die Gesamtmenge dieser Reste beziehen.

14. Blockcopolymere gemäss Anspruch 13, dadurch gekennzeichnet, dass der Anteil der Xylylendiaminreste und/oder der Aminobenzylaminreste 50 bis 75 Mol % beträgt.

15. Blockcopolymer gemäss einem der Ansprüche 13 oder 14, dadurch gekennzeichnet, dass sich die Xylylendiaminreste von 1,3-Xylylendiamine ableiten.

16. Blockcopolymere gemäss Anspruch 13, dadurch gekennzeichnet, dass sich praktisch alle von Xylylendiamin und/oder von Aminobenzylamin abweichenden Reste $R_2$, $R_4$ und falls vorhanden $R_6$ von Diaminodiphenylsulfon ableiten.

17. Verfahren zur Herstellung von vernetzten Polyamid-Polyimid Blockcopolymeren, dadurch gekennzeichnet, dass man die Verbindungen enthaltend Blöcke der Formeln Ia und IIb und/oder IIc oder der Formeln Ib und IIa und/oder IIc oder der Formeln Ic und IIa und/oder IIb gemäss Anspruch 1 auf Temperaturen oberhalb ihres Glasumwandlungspunktes erhitzt.

18. Verwendung der Polyamid-Polyimid Blockcopolymeren gemäss Anspruch 1 zur Herstellung von Beschichtungen, Folien und flexiblen Laminaten oder als Klebstoffe, Matrixharze oder Pressmassen.